# DEMANDE DE BREVET EUROPEEN

(11) **EP 1 238 738 A1**
(43) Date de publication de la demande: **11.09.2002**
(21) Numéro de dépôt: 01410023.4
(22) Date de dépôt: 05.03.2001
(51) Int. Cl.: B23G 3/00, F16H 35/10

(54) **Appareil à tarauder**

(71) Demandeur: Roncero, Giordano, 74460 Marnaz (FR)
(72) Inventeur: Roncero, Giordano, 74460 Marnaz (FR)
(74) Mandataire: Gasquet, Denis

(57) **Abrégé**

Appareil à tarauder (1) destiné à être actionné par une machine outil du type comportant des moyens de transmission (MT) destinés à transmettre un mouvement de rotation et un mouvement de translation à un taraud sous la sollicitation de la machine outil caractérisé en ce que les moyens de transmission (MT) comportent des moyens de limitation du couple (MLC) destinés à protéger les moyens de transmission lorsque le couple résistant au niveau du taraud est supérieur à un seuil maximum en interrompant la transmission de la sollicitation entre la machine outil et le taraud.

## Description

La présente invention concerne un appareil à tarauder du type destiné à être monté sur une machine de découpe ou d'emboutissage par exemple afin d'être actionné par ladite machine pour permettre le taraudage d'un trou. Elle concerne plus particulièrement des perfectionnements de l'appareil à tarauder destinés à améliorer sa sécurité et à faciliter son usage.

On connaît dans l'art antérieur de nombreux dispositifs de taraudage tels que ceux décrits dans les brevets FR.1.444.213, FR.2.495.979 ou FR 2.688.435 par exemple. Ils comportent de manière générale des moyens de transformation destinés à transformer la sollicitation axiale de la machine en un mouvement rotatif et translatif du taraud. Toutefois, ces appareils présentent de nombreux inconvénients liés à leur mise en oeuvre, à leur fiabilité et à la qualité du taraudage obtenu. En effet, ces dispositifs de taraudage ne permettent généralement pas de gérer l'usure du taraud proprement dit entraînant l'endommagement de l'appareil lorsque l'outil casse, ils ne permettent pas non plus de gérer directement la levée de la bande et sont difficilement modulables en fonction des applications diverses que l'on souhaite réaliser.

Aussi, la présente invention a pour but de remédier aux inconvénients précités à l'aide de moyens simples, fiables, faciles à mettre en oeuvre et peu onéreux. Elle apporte de nombreux perfectionnements aux dispositifs de taraudage pour améliorer leur fiabilité notamment ainsi que leur sécurité et leur facilité d'utilisation et de mise en oeuvre. Elle permet également l'adaptation du dispositif à l'application désirée de manière simple tout en réduisant l'encombrement de l'appareil à tarauder.

Ainsi, selon sa caractéristique principale, l'appareil à tarauder destiné à être actionné par une machine outil est du type comportant des moyens de transmission destinés à transmettre un mouvement de rotation et un mouvement de translation à un taraud sous la sollicitation de la machine outil, et est caractérisé en ce que les moyens de transmission comportent des moyens de limitation du couple destinés à protéger les moyens de transmission lorsque le couple résistant au niveau du taraud est supérieur à un seuil maximum en interrompant la transmission de la sollicitation entre la machine outil et le taraud.

Selon une caractéristique complémentaire de l'appareil à tarauder de l'invention, celui-ci est caractérisé en ce que les moyens de limitation du couple sont formés par un train de pignon dont au moins un est monté mobile entre une position embrayée et une position escamotée.

Selon une autre caractéristique de l'appareil à tarauder, les moyens de limitation du couple sont formés par le pignon mobile disposé entre un pignon moteur et un pignon de sortie, le dit pignon mobile étant monté sur un bras pivotant articulé en rotation autour de l'axe du pignon moteur à l'encontre de moyens de retenue élastique.

Selon une caractéristique complémentaire de l'appareil à tarauder, le mouvement du pignon mobile entre sa position embrayée et sa position escamotée s'effectue à l'encontre de moyens de retenue élastique dont la force de retenue peut-être réglée à l'aide de moyens de réglage.

Selon le mode de réalisation préféré de l'appareil à tarauder, celui-ci est caractérisé en ce que les moyens de limitation du couple comportent des moyens de verrouillage du pignon mobile en position escamotée.

Selon ce mode de réalisation préféré de l'appareil à tarauder, les moyens de limitation du couple comportent des moyens de manoeuvre manuels destinés à permettre à l'utilisateur de faire passer le pignon mobile de sa position escamotée à sa position embrayée.

Selon une autre caractéristique de l'appareil à tarauder, les moyens de transmission présentent un moyeu d'entraînement qui entraîne en rotation une broche portant le taraud tout en lui permettant un mouvement de translation longitudinale, ladite broche étant solidaire d'une patronne mâle montée dans une patronne femelle dans une relation de type vis écrou pour commander la translation voulue de la broche et de son taraud par rapport au carter de l'appareil à tarauder et en ce que la patronne femelle est montée mobile en translation longitudinale par rapport au carter.

Selon une caractéristique complémentaire de l'appareil à tarauder de l'invention, celui-ci est caractérisé en ce que les moyens de transmission présentent un moyeu d'entraînement qui entraîne en rotation une broche portant le taraud tout en lui permettant un mouvement de translation longitudinale, ladite broche étant solidaire d'une patronne mâle montée dans une patronne femelle dans une relation de type vis écrou pour commander la translation voulue de la broche et de son taraud par rapport au carter de l'appareil à tarauder et en ce que l'appareil à tarauder comporte des moyens de synchronisation destinés à synchroniser le mouvement de translation de la bande de la machine outil avec les patronnes pour leur faire subir un mouvement identique par rapport au carter de l'appareil.

Selon le mode de réalisation illustré de l'appareil à tarauder, les moyens de synchronisation sont formés par une pièce de poussée solidaire du presse flanc de la machine outil destinée à coopérer avec des organes poussoirs pour entraîner la patronne femelle en mouvement par rapport au carter selon l'axe de taraudage.

Selon une autre caractéristique de l'appareil à tarauder de l'invention, celui-ci est caractérisé en ce que la tête de l'appareil à tarauder où sont disposés un dispositif de patronnes, une broche porte taraud, le taraud et un moyeu d'entraînement possède une forme externe cylindrique.

D'autres caractéristiques et avantages de l'invention se dégageront de la description qui va suivre en regard des dessins annexés qui ne sont donnés qu'à titre d'exemples non limitatifs.

Les figures 1 à 12 illustrent le mode de réalisation préféré de l'appareil à tarauder de l'invention et une variante d'exécution.

La figure 1 représente en vue de face le mode de réalisation préféré de l'appareil à tarauder.

La figure 2 illustre en vue de dessus l'appareil à tarauder.

La figure 3 et la figure 4 montrent en vue de face l'appareil à tarauder monté sur une machine outil respectivement en position initiale et en position active de taraudage.

La figure 5 illustre en perspective l'appareil à tarauder et ses moyens de transmission.

La figure 6 est une vue en perspective des organes constitutifs de l'appareil à tarauder.

La figure 7 représente en perspective les moyens de limitation du couple de l'appareil à tarauder.

Les figures 8a et 8b représentent schématiquement les moyens de limitation du couple respectivement en position active embrayée et en position désaccouplée ou escamotée.

Les figures 9a et 9b sont des vues en coupe transversale illustrant les moyens de limitation du couple respectivement en position embrayée et en position escamotée.

Les figures 10a et 10d illustrent schématiquement la descente synchronisée de la patronne et de la bande pendant l'opération de taraudage.

La figure 11 illustre en perspective l'appareil à tarauder et la mise en place de sa tête.

La figure 12 illustre en perspective une variante d'exécution où la tête est une tête multitaraud.

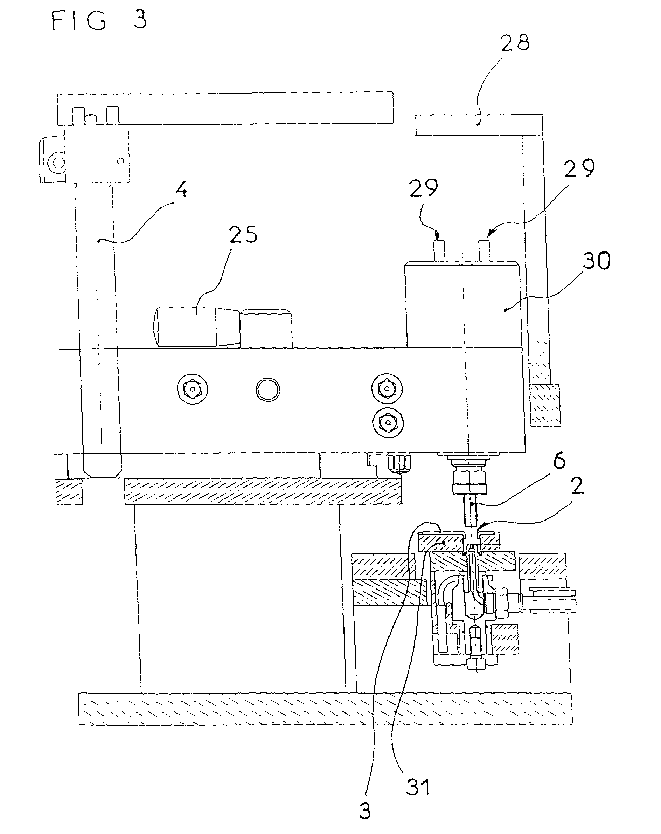

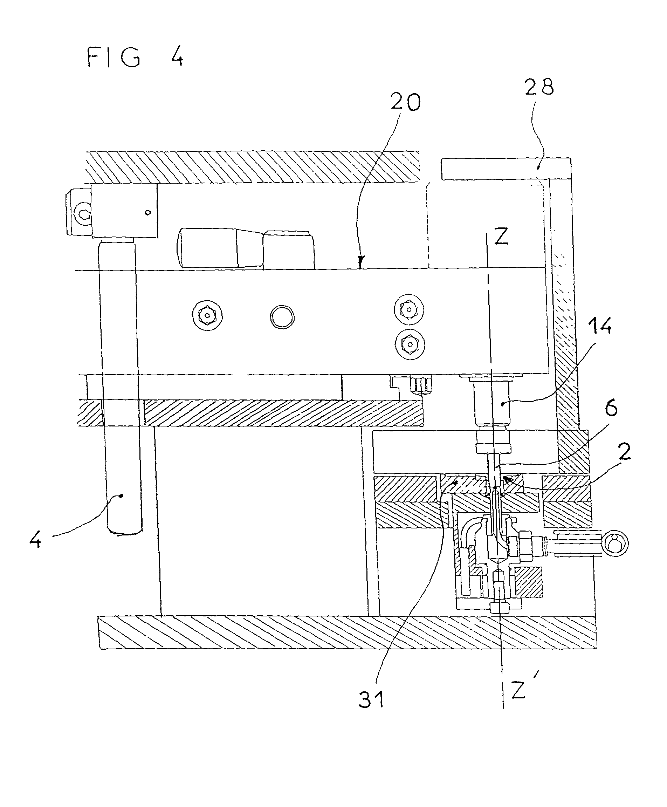

Selon l'invention, l'appareil à tarauder ou dispositif de taraudage portant la référence générale (1) est du type destiné à être monté sur une machine outil de découpe ou d'emboutissage par exemple, pour être actionné par celle-ci afin de provoquer le taraudage d'un trou (2) situé dans une tôle ou plaque (3) tel qu'illustré figures 3 et 4.

Selon l'invention, l'appareil à tarauder (1) comprend de manière connue en soi des moyens d'entrée (4, 5) tel qu'un système vis-écrou destinés à être sollicités par la machine outil, elle comprend également des moyens de transmission (MT) destinés à transmettre un mouvement de translation et un mouvement rotatif au taraud (6) pour effectuer le taraudage lorsque les moyens d'entrée sont sollicités en rotation.

Selon l'invention, les moyens de transmission (MT) comportent des moyens de limitation du couple (MLC) destinés à protéger leurs organes de transmission lorsque le couple résistant au niveau du taraud (6) dépasse un seuil donné. Ces moyens de limitation sont destinés à interrompre la transmission de la sollicitation entre les moyens d'entrée (4, 5) et le taraud (6) lorsque la résistance est trop importante. Ainsi, lorsque le taraud s'use le couple de résistance augmente et provoque le déclenchement des moyens de limitation (MLC) afin de préserver les organes constitutifs des moyens de transmission (MT) qui forment en partie l'appareil à tarauder (1).

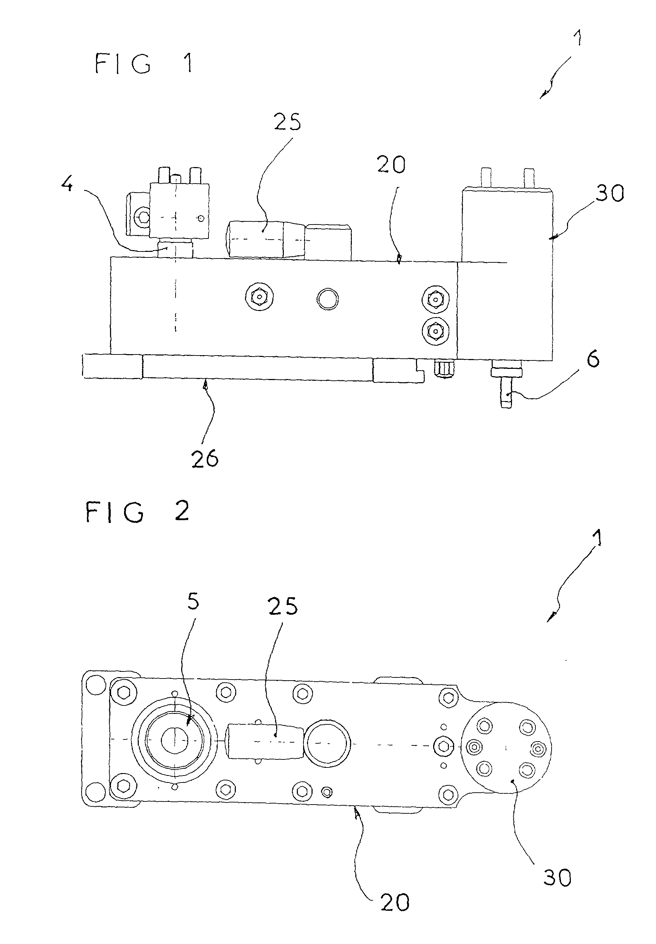

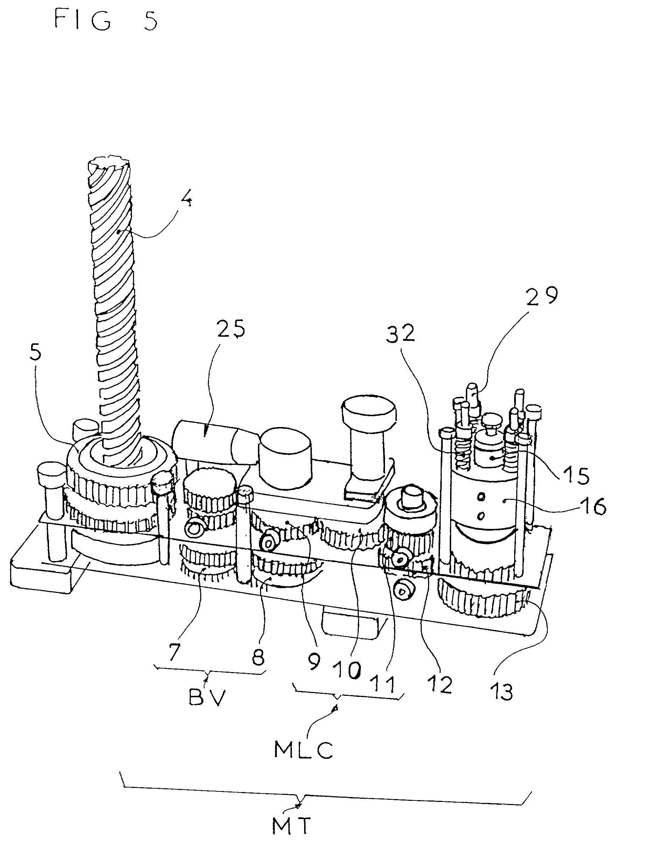

Selon le mode de réalisation préféré de l'appareil à tarauder illustré figure 1 à 11, les moyens de transmission sont constitués par un train d'engrenages disposé dans un carter (20), à savoir deux pignons de transmission (7, 8) formant la boite de vitesses (BV), trois pignons intermédiaires (9, 10, 11) formant en partie les moyens de limitation du couple (MLC) et un pignon d'entraînement (12) destiné à coopérer avec le moyeu d'entraînement (13) de la broche porte taraud (14).

Selon le mode de réalisation préféré de l'appareil à tarauder (1), le moyeu d'entraînement (13) et la broche porte taraud (14) sont montés ensemble pour être solidaires en rotation autour de l'axe longitudinal (ZZ') du taraud (6) tout en permettant la translation longitudinale respective entre eux le long de cet axe. La translation de la broche et de son taraud (14, 6) sont obtenus par un système de patronne connu en soi de type vis écrou et formé par une patronne mâle (15) fixé à l'extrémité supérieure de la broche (14) destinée à être entraîné en translation longitudinale par une patronne femelle (16) fixe en rotation par rapport au référentiel lié au carter (20) ou à la machine outil. La patronne femelle (16) présente un filetage interne dont le pas est similaire à celui que l'on veut tarauder et la rotation de la patronne mâle (15) entraînée par la broche (14) permet grâce à la coopération entre son filetage externe et le filetage interne de la patronne femelle (16) d'obtenir la translation longitudinale voulue de l'ensemble patronne mâle (15), broche (14) et taraud (6).

Selon l'invention, les moyens de limitation du couple (MLC), sont formés par un train de pignons intermédiaires (9, 10, 11) alignés dont au moins un des pignons (10) est monté mobile entre une position embrayée de transmission (A) et une position débrayée escamotée (B) où il arrête la transmission du mouvement rotatif. Le déplacement du pignon mobile (10) s'effectue à l'encontre de moyens de retenue de type élastique qui sont avantageusement réglables afin de permettre le réglage du seuil de limitation du couple.

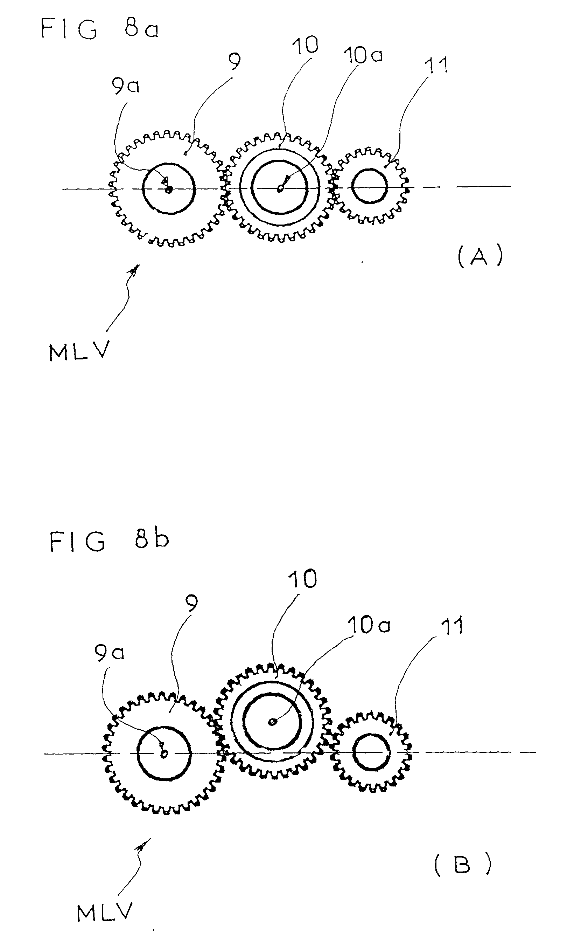

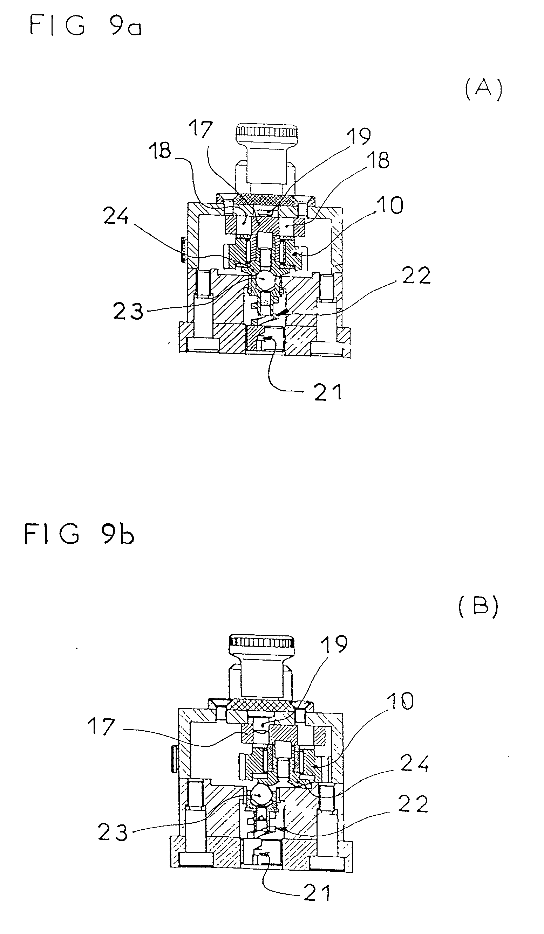

Selon le mode de réalisation préféré de l'appareil à tarauder de l'invention, le pignon mobile (10) est monté sur un bras pivotant (17) comportant des moyens d'indexation tels que des trous (18) susceptibles de permettre le verrouillage du pignon (10) dans sa position escamotée (B) en coopérant avec un doigt de verrouillage (19) monté sur le carter (20). Le pivotement de l'axe (10a) du pignon mobile (10) s'effectue avantageusement autour de l'axe (9a) du pignon moteur (9) des moyens de limitation du couple (MLC) sur lequel s'articule le bras pivotant (17). Ainsi, lorsque le pignon de sortie (11) du limiteur de couple se bloque ou oppose un couple résistant suffisant, le pignon moteur (9) entraîne le pignon mobile (10) en pivotement de sa position embrayée (A) illustrée figures 8a et 9a à sa position escamotée (B) illustrée figures 8b et 9b. Notons que l'inertie du pignon (10) et du bras pivotant (17) suffit à amener le pignon (10) dans une position désaccouplée où aucune dent ne s'engrène avec des dents du pignon de sortie (11), cette position étant verrouillée par les moyens de verrouillage (18,19).

On peut noter que le bras pivotant (17) possède deux trous d'indexation (18) de part et d'autre pour permettre le verrouillage quel que soit le sens de rotation des pignons (9, 10, 11), c'est à dire que le pignon mobile (10) peut s'escamoter de part et d'autre du plan médian passant par les axes des pignons moteur et de sortie (9,11).

Les moyens de réglage du seuil de résistance du limiteur de couple sont constitués par une vis de tarage (21) destinée à comprimer plus ou moins le ressort de sécurité (22) qui forme avec la bille (23) les moyens de retenue élastiques (22, 23) qui s'opposent au déplacement du pignon mobile (10). Le ressort (22) force la bille (23) dans un logement conique (24) solidaire du pignon mobile (10) et disposé par exemple à l'extrémité de son axe de rotation (10a). Notons que lorsque la bille (23) quitte son logement conique (24), la rampe latérale externe du logement conique coopère ensuite avec la bille pour écarter le pignon de sa position embrayée (A) vers sa position escamotée (B) où il est alors verrouillé.

On peut noter que les moyens de verrouillage formés par les trous (18) et le doigt de verrouillage (19) pourraient être remplacés par des dispositifs équivalents sans pour autant sortir du champs de protection de l'invention. Ainsi selon une variante d'exécution non représentée, ces moyens de verrouillage pourraient être obtenus par des logements latéraux solidaire du pignon mobile (10) et entourant le logement conique central (24) pour verrouiller le pignon mobile dans ses positions escamotées grâce à leur coopération avec la bille (23) par exemple.

Selon le mode de réalisation préféré de l'appareil à tarauder (1), les moyens de limitation du couple (MLC) comportent un levier de manoeuvre (25) destiné à permettre à l'utilisateur d'actionner les dits moyens pour les faire passer de leur position escamotée (B) à leur position embrayée (A). Ce levier de manoeuvre (25) est monté sur le bras pivotant (17) qui porte l'axe (10a) du pignon mobile (10). On peut noter que les moyens de réglage du limiteur de couple (MLC), les moyens de verrouillage (18, 19) ainsi que les moyens de manoeuvre manuels (25) pourraient présenter une configuration ou un agencement différent en utilisant des moyens équivalents à ceux décrits dans le mode de réalisation préféré sans pour autant sortir du champs de protection de l'invention.

Selon un perfectionnement non représenté, les moyens de limitation du couple (MLC) peuvent comprendre un contacteur destiné à détecter la position embrayée (A) ou la position désaccouplée (B) du limiteur de couple. Les moyens de limitation peuvent également comporter un capteur d'effort susceptible de mesurer le couple résistant, ceci pouvant permettre de connaître l'usure de l'outil grâce à cette mesure par exemple.

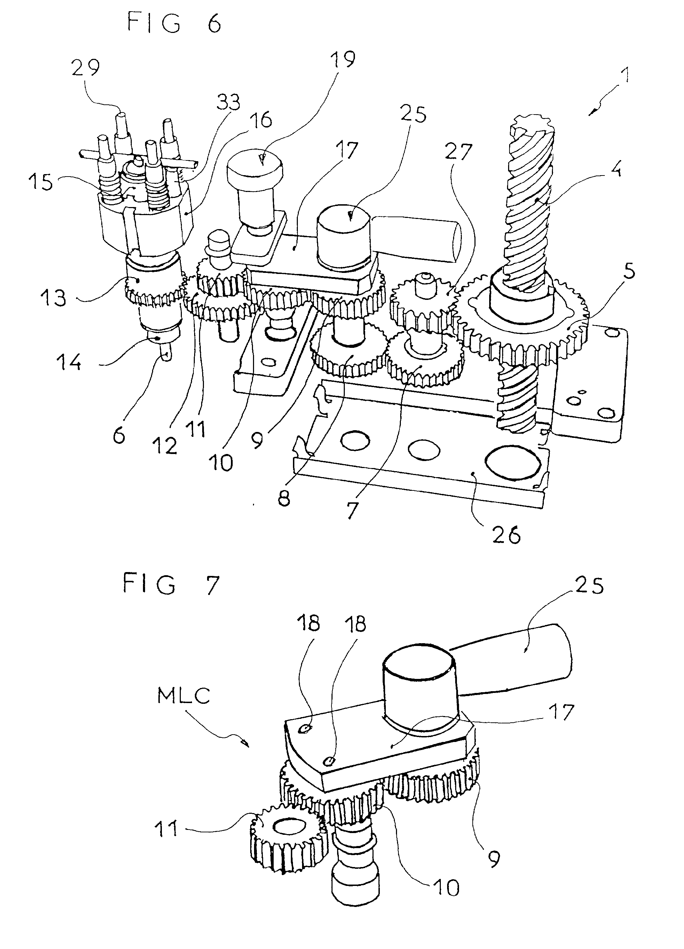

Selon le mode de réalisation préféré de l'appareil à tarauder (1), le carter (20) comprend dans son enceinte l'écrou d'entrée (5), les pignons (9, 10, 11) du limiteur de couple et le pignon de sortie (12) ainsi que le moyeu d'entraînement (13) destiné à coopérer avec la broche porte taraud (14). On peut noter que dans le train d'engrenage réalisent les moyens de transmission (MT) les pignons de transmission (7, 8) qui forment la boîte de vitesses (BV) de l'appareil (1) sont situés à l'extérieur du carter (20) pour pouvoir être changés facilement par l'utilisateur. Ainsi, ces pignons (7, 8) sont montés de manière facilement démontable, l'un sur l'axe du pignon moteur (9) du limiteur de couple (MLC) et l'autre sur l'axe d'un pignon secondaire (27) destiné à s'engrener avec la denture externe de l'écrou d'entrée (5) comme le montre la figure 6. Ces pignons de transmission (7, 8) sont avantageusement protégés par un cache (26) démontable et sont montés de manière amovible à l'extrémité des dits axes hors du carter (20) pour permettre de modifier le rapport de transmission en remplaçant les dits pignons (7, 8) et sans démonter l'ensemble de l'appareil à tarauder (1).

Selon le mode de réalisation préféré de l'appareil à tarauder (1) le pignon de sortie (11) du limiteur de couple (MLC) est porté par le même axe que le pignon d'entraînement (12), le limiteur de couple (MLC) se trouvant dans la chaîne cinématique de transmission, juste à proximité de l'outil (6). En revanche, les pignons formant la boîte de vitesse (BV) sont avantageusement disposés entre le limiteur de couple (MLC) et les moyens d'entrée (4, 5). Il va de soi que la configuration de la chaîne de transmission, son nombre de pignons, le placement du limiteur de couple ou de la boîte de vitesse dans la chaîne de transmission par exemple, pourraient être différents sans pour autant sortir du champs de protection de l'invention.

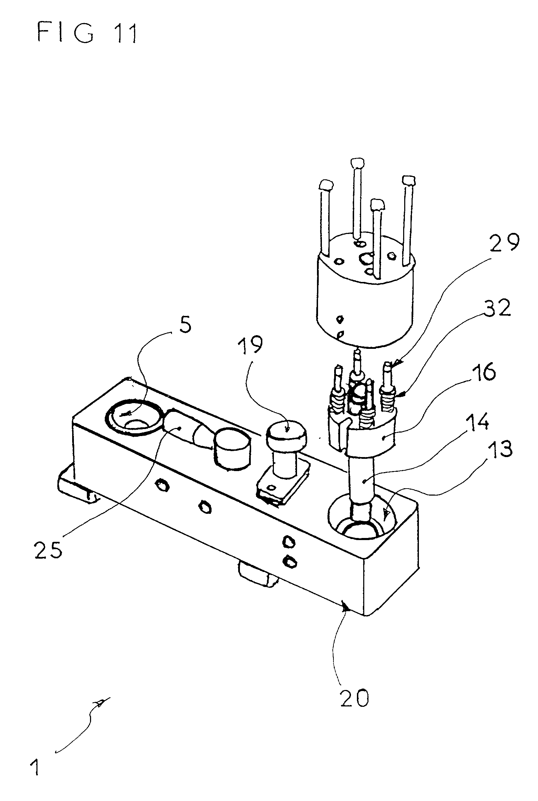

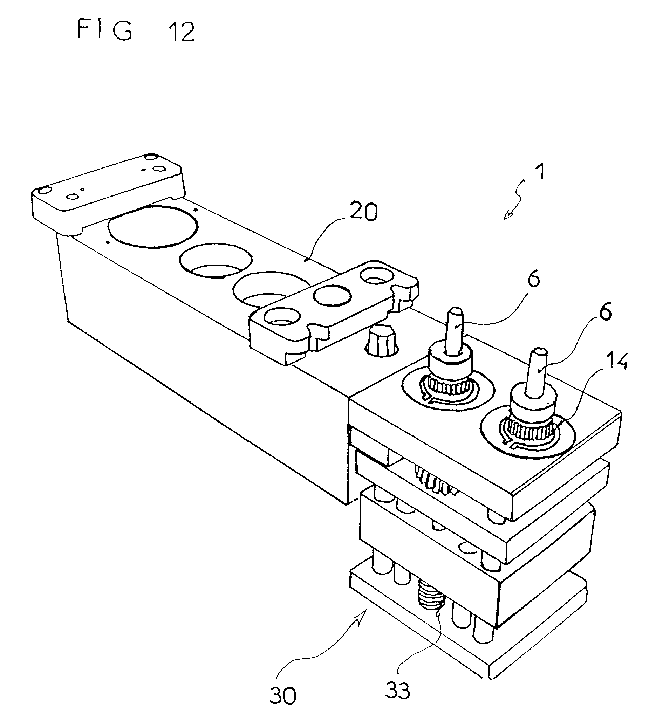

Selon le mode de réalisation illustré, la tête de l'appareil à tarauder (30) qui comprend la broche (14) et son taraud (6), le système de patronne (15, 16) ainsi que des moyens de synchronisation de la descente des patronnes et des moyens de protection décrits ci-après, est située à l'extrémité du carter et est destinée à être montée sur le carter (20) pour coopérer avec le moyeu d'entraînement (13) de manière amovible comme le montre la figure 11. Toutefois, il va de soi que l'on ne sortirait pas du champs de protection de l'invention en réalisant un appareil à tarauder (1) dont les moyens de transmission (MT) seraient sensiblement identiques mais dont la tête (30) serait remplacée par une tête multitaraud, c'est-à-dire comportant plusieurs outils (6). Ainsi, selon une variante d'exécution, l'appareil à tarauder comprend un carter muni des moyens de transmission sur lequel on peut adapter à volonté soit une tête monotaraud comme dans le premier mode de réalisation illustré, soit une tête multitaraud comme le montre la variante d'exécution illustrée figure 12.

Selon le mode de réalisation préféré illustré figure 2, on peut noter que la forme externe de la tête (30) de l'appareil à tarauder (1) est cylindrique. Ainsi lors de son utilisation, son encombrement se trouve réduit et permet l'utilisation simultanée d'appareils similaires au voisinage de la tête de taraud (30).

Une autre caractéristique de l'appareil à tarauder (1), illustrée figures 3, 4 et figures 10a à 10d, est qu'il comporte des moyens de synchronisation de la descente des patronnes avec la bande (31) de la machine outil. Ainsi lors de la levée ou la descente de la bande (31) sur laquelle est positionnée la plaque à tarauder (3), la patronne femelle (16) suit exactement le mouvement axial de la bande (31). Ceci permet le taraudage pendant le mouvement de la bande (31) puisque la patronne mâle (15) commande le déplacement axial de la broche (14) par rapport à la patronne femelle (16) qui sert de référence.

Selon le mode de réalisation préféré de l'appareil à tarauder, les moyens de synchronisation sont constitués par une pièce de poussée (28) solidaire du presse flanc selon l'axe vertical de taraudage (ZZ') et destinée à coopérer avec des organes poussoirs (29) disposés dans la tête (30) de l'appareil à tarauder. Les organes poussoirs (29) sont destinés à entraîner la patronne femelle (16) dans un mouvement de translation axial identique à celui de la pièce de poussée (28) c'est à dire identique au mouvement de la bande (31).

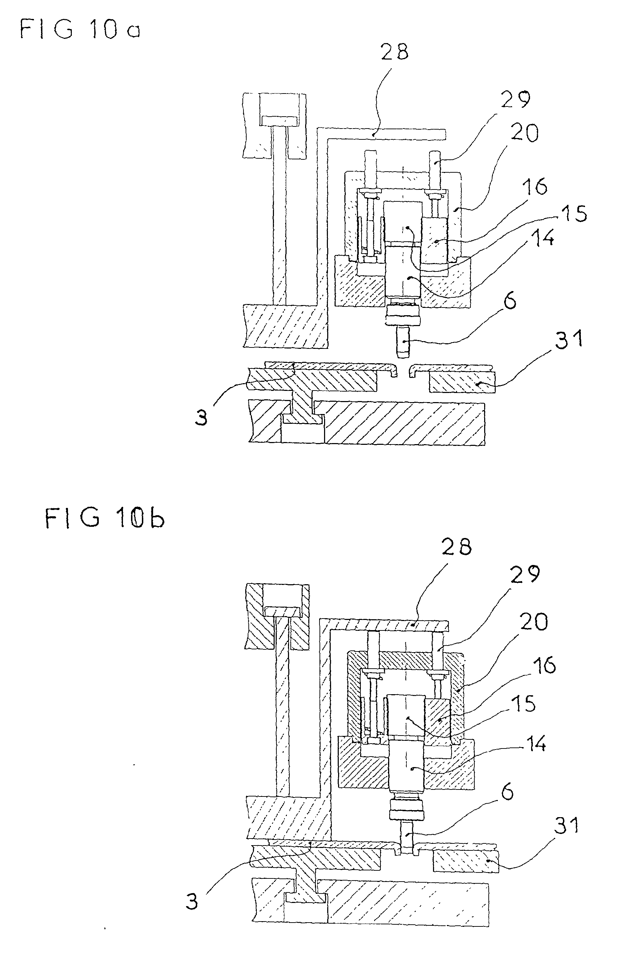

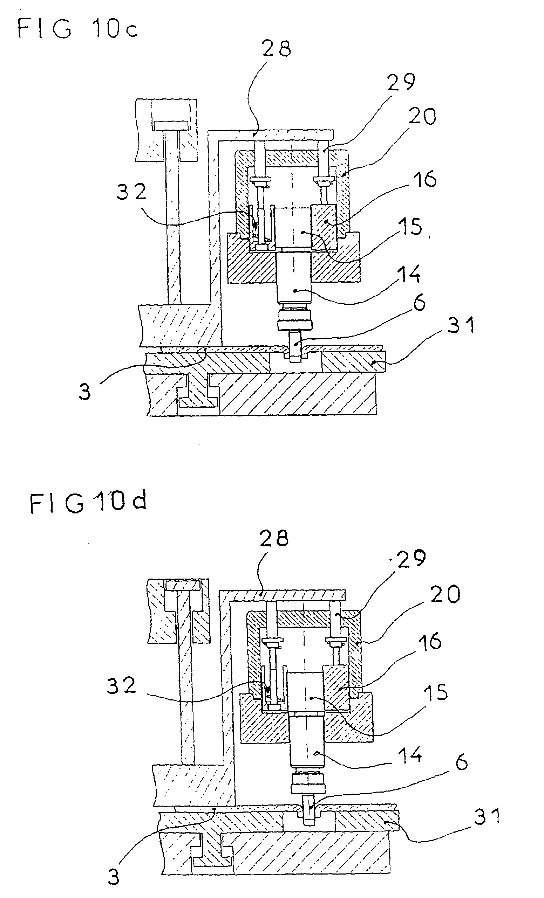

Comme le montrent les figures 10a à 10d qui illustrent l'entrée en contact simultané du presse flanc avec la bande (31) et de la pièce de poussée (28) avec les poussoirs (29) (figure 10b) ainsi que la descente synchronisée pendant le taraudage (figure 10c et 10d), les organes poussoirs (29) n'agissent pas directement sur la patronne femelle (16) mais sollicitent celle-ci par l'intermédiaire de ressorts de compression (32) qui forment les moyens de protection de la tête (30) de l'appareil (1). Ainsi si le mouvement axial du taraud (6) est empêché, la descente de la pièce de poussée (28) est supportée par les ressorts (32) pour ne pas endommager les organes constitutifs de la tête.

Bien entendu, les moyens de protection sont réglables, ainsi les ressorts (32) pouvant aisément être remplacés en fonction du seuil de tolérance choisi par l'utilisateur. Par ailleurs, on peut noter que lors de la remontée de la bande (31), des moyens de rappel (33) tels qu'un ressort disposé entre le carter (20) et la patronne (16) illustré figure 6 provoque la synchronisation du mouvement axial de remontée de la patronne femelle (16) avec la pièce de poussée (28) et donc avec la bande (31). Notons de plus que la tête (30) comporte des moyens de guidage de la patronne femelle (16) destinés à la guider dans son mouvement axial de descente et de montée tout en empêchant tout mouvement de rotation de cette patronne (16) par rapport au carter (20).

On peut constater par ailleurs que la configuration spécifique de la tête du dispositif à tarauder, où la patronne femelle (16) est montée mobile par rapport au carter (20) selon l'axe longitudinal (ZZ'), permet la protection de ses organes constitutifs lorsque l'utilisateur effectue un mauvais réglage initial. Ainsi, lorsque l'ensemble taraud, broche porte taraud et patronne mâle (6, 14, 15) remonte et arrive en butée contre la paroi supérieure du carter (20) en raison du mauvais réglage initial de la référence, la patronne femelle (16) est alors forcée dans un déplacement longitudinal selon l'axe (ZZ') vers le bas à l'encontre des moyens de rappel (33) jusqu'à ce qu'elle se désaccouple de la patronne mâle (15), préservant ainsi l'intégrité des pièces de la tête de l'appareil à tarauder (1). Notons que les moyens destinés à permettre le montage mobile de la patronne femelle, tels que les moyens de guidage et ses moyens de rappel, forment des moyens de protection complémentaires de l'appareil à tarauder.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Appareil à tarauder (1) destiné à être actionné par une machine outil du type comportant des moyens de transmission (MT) destinés à transmettre un mouvement de rotation et un mouvement de translation à un taraud (6) sous la sollicitation de la machine outil **caractérisé en ce que** les moyens de transmission (MT) comportent des moyens de limitation du couple (MLC) destinés à protéger les moyens de transmission lorsque le couple résistant au niveau du taraud est supérieur à un seuil maximum en interrompant la transmission de la sollicitation entre la machine outil et le taraud (6).

2. Appareil à tarauder (1) selon la revendication 1 **caractérisé en ce que** les moyens de limitation du couple (MLC) sont formés par un train de pignon (9, 10, 11) dont au moins un (10) est monté mobile entre une position embrayée (A) et une position escamotée (B).

3. Appareil à tarauder (1) selon la revendication 2 **caractérisé en ce que** les moyens de limitation du couple (MLC) sont formés par le pignon mobile (10) disposé entre un pignon moteur (9) et un pignon de sortie (11), le dit pignon mobile étant monté sur un bras pivotant articulé en rotation autour de l'axe du pignon moteur à l'encontre de moyens de retenue élastique (21, 22, 23).

4. Appareil à tarauder (1) selon la revendication 2 ou 3 **caractérisé en ce que** le mouvement du pignon mobile (10) entre sa position embrayée (A) et sa position escamotée (B) s'effectue à l'encontre de moyens de retenue élastique (21, 22, 23) dont la force de retenue peut-être réglée à l'aide de moyens de réglage (21).

5. Appareil à tarauder (1) selon l'une quelconque des revendication 2 à 4 **caractérisé en ce que** les moyens de limitation du couple (MLC) comportent des moyens de verrouillage du pignon mobile (10) en position escamotée (B).

6. Appareil à tarauder (1) selon l'une quelconque des revendications 2 à 5 **caractérisé en ce que** les moyens de limitation du couple (MLC) comportent des moyens de manoeuvre manuels (25) destinés à permettre à l'utilisateur de faire passer le pignon mobile (10) de sa position escamotée (B) à sa position embrayée (A).

7. Appareil à tarauder (1) selon l'une quelconque des revendications précédentes **caractérisé en ce que** les moyens de transmission (MT) présentent un moyeu d'entraînement (13) qui entraîne en rotation une broche (14) portant le taraud (6) tout en lui permettant un mouvement de translation longitudinale, ladite broche étant solidaire d'une patronne mâle (15) montée dans une patronne femelle (16) dans une relation de type vis écrou pour commander la translation voulue de la broche (14) et de son taraud (6) par rapport au carter (20) de l'appareil à tarauder (1) et **en ce que** la patronne femelle (16) est montée mobile en translation longitudinale par rapport au carter (20).

8. Appareil à tarauder (1) selon l'une quelconque des revendications précédentes **caractérisé en ce que** les moyens de transmission (MT) présentent un moyeu d'entraînement (13) qui entraîne en rotation une broche (14) portant le taraud (6) tout en lui permettant un mouvement de translation longitudinale, ladite broche étant solidaire d'une patronne mâle (15) montée dans une patronne femelle (16) dans une relation de type vis écrou pour commander la translation voulue de la broche (14) et de son taraud (6) par rapport au carter (20) de l'appareil à tarauder (1) et **en ce que** l'appareil à tarauder (1) comporte des moyens de synchronisation destinés à synchroniser le mouvement de translation de la bande (31) de la machine outil avec les patronnes (15, 16) pour leur faire subir un mouvement identique par rapport au carter (20) de l'appareil (1).

9. Appareil à tarauder (1) selon la revendication 7 et 8 **caractérisé en ce que** les moyens de synchronisation sont formés par une pièce de poussée (28) solidaire du presse flanc de la machine outil destinée à coopérer avec des organes poussoirs (29) pour entraîner la patronne femelle (16) en mouvement par rapport au carter (20) selon l'axe de taraudage (ZZ').

10. Appareil à tarauder (1) selon l'une quelconque des revendication précédentes **caractérisé en ce que** la tête (30) de l'appareil à tarauder (1) où sont disposés un dispositif de patronnes (15, 16), une broche porte taraud (14), le taraud (6) et un moyeu d'entraînement (13) possède une forme externe cylindrique.
